# DEMANDE DE BREVET EUROPEEN

(11) **EP 3 139 524 A1**
(43) Date de publication de la demande: **08.03.2017**
(21) Numéro de dépôt: 16186981.3
(22) Date de dépôt: 02.09.2016
(51) Int. Cl.: H04B 10/116, B32B 17/10

(54) **SYSTEME D'EMISSION D'UN SIGNAL DE LUMIERE MODULEE**

(30) Priorité: 03.09.2015 FR 1558173
(71) Demandeur: Oledcomm, 78140 Velizy Villacoublay (FR)
(72) Inventeur: MAYER, Cédric, 77176 SAVIGNY-LE-TEMPLE (FR); GARCIA-MARQUEZ, Jorge, 78180 MONTIGNY LE BRETONNEUX (FR)
(74) Mandataire: Lavaud, Thomas

(57) **Abrégé**

Système d'émission d'un signal lumineux modulé comportant un module de commande (3) destiné à générer un signal électrique de modulation et un matériau modulant adapté à transmettre un flux lumineux issu d'une source lumineuse externe (14), la modulation du flux lumineux étant réalisée par une variation, sous l'effet du signal électrique de modulation, d'une caractéristique optique du matériau modulant.

## Description

L'invention concerne le domaine des systèmes de communication par signaux de lumière modulée.

### ARRIERE PLAN DE L'INVENTION

L'utilisation de la technologie Li-Fi (pour « Light Fidelity ») pour mettre en oeuvre une communication sans fil présente de nombreux avantages : disponibilité du spectre optique, absence d'interférences électromagnétiques, etc.

De plus, grâce notamment au développement de diodes électroluminescentes (LED) présentant des capacités de commutations très importantes et de photodiodes présentant des temps de réponse très rapides, on peut émettre et recevoir avec le Li-Fi des données avec un débit nettement plus important que le débit offert par exemple par la technologie WiFi (pour « Wireless Fidelity »).

La technologie Li-Fi est ainsi parfaitement adaptée pour transmettre et recevoir de la musique, des vidéos, des données internet, des données de mesure (température, luminosité, etc.), des alarmes (incendie, présence de vapeurs toxiques, etc.), pour connecter en réseau des capteurs ou d'autres types d'appareils, etc.

Les concepteurs des émetteurs et des récepteurs de signaux Li-Fi cherchent bien sûr à réduire les coûts de développement et d'intégration de ces émetteurs et de ces récepteurs.

Pour réduire le coût d'intégration des émetteurs de signaux Li-Fi, il est particulièrement intéressant d'intégrer ces émetteurs à des systèmes préexistant ou bien à des systèmes qui remplissent une fonction additionnelle. Ainsi, en équipant une lampe à LED d'un émetteur de signaux Li-Fi utilisant des diodes électroluminescentes de la lampe à LED, on intègre parfaitement l'émetteur de signaux Li-Fi dans l'espace éclairé par la lampe à LED, et on réduit le coût d'intégration de l'émetteur en conférant à la lampe à LED à la fois une fonction d'éclairage et une fonction d'émetteur de signaux Li-Fi.

### OBJET DE L'INVENTION

L'invention a pour objet un système d'émission de lumière modulée présentant un coût d'intégration réduit.

### RESUME DE L'INVENTION

En vue de la réalisation de ce but, on propose un système d'émission d'un signal lumineux modulé comportant un module de commande destiné à générer un signal électrique de modulation et un matériau modulant adapté à transmettre un flux lumineux issu d'une source lumineuse externe, la modulation du flux lumineux étant réalisée par une variation, sous l'effet du signal électrique de modulation, d'une caractéristique optique du matériau modulant.

L'utilisation du matériau modulant représente une alternative aux diodes électroluminescentes pour émettre un signal lumineux modulé. Le matériau modulant peut notamment se présenter sous la forme d'une fine couche ou bien d'un film et peut aisément être intégré dans une vitre, dans un panneau de type panneau d'abribus, dans un écran de liseuse électronique, etc. On utilise donc des éléments (panneau, écran) de systèmes préexistants pour émettre le signal lumineux modulé, ce qui réduit le coût d'intégration du système d'émission.

On note qu'à la différence des signaux Li-Fi émis par des diodes électroluminescentes où la source de lumière est modulée, le système d'émission de l'invention utilise un matériau modulant adapté par exemple à s'obscurcir ou à passer dans mode translucide afin de laisser traverser la lumière du soleil ou de lampes de tous types (pas uniquement du type lampe-à-LED) et d'autres sources différentes de lumières dans le spectre visible et/ou infrarouge.

D'autres caractéristiques et avantages de l'invention ressortiront à la lecture de la description qui suit de modes de réalisation particuliers, non limitatifs de l'invention.

### BREVE DESCRIPTION DES DESSINS

Il sera fait référence aux dessins annexés parmi lesquels :
- la figure 1 représente un système d'émission d'un signal lumineux modulé selon un premier mode de réalisation de l'invention, ainsi qu'un récepteur destiné à recevoir le signal lumineux modulé ;
- la figure 2 représente un matériau modulant du système d'émission du signal lumineux modulé selon le premier mode de réalisation de l'invention, le matériau modulant étant un matériau électrochrome intégré dans un panneau d'abribus ;
- la figure 3 représente un matériau modulant d'un système d'émission d'un signal lumineux modulé selon un deuxième mode de réalisation de l'invention, le matériau modulant étant un matériau électrophore intégré dans un écran de liseuse électronique ;
- la figure 4a représente un matériau modulant d'un système d'émission d'un signal lumineux modulé selon un troisième mode de réalisation de l'invention, le matériau modulant étant un matériau à cristaux liquides intégré dans un panneau d'abribus ;
- la figure 4b est une figure analogue à la figure 4a, dans laquelle une tension est appliquée aux bornes d'électrodes pour générer un champ électrique au sein du matériau à cristaux liquides.

### DESCRIPTION DETAILLEE DE L'INVENTION

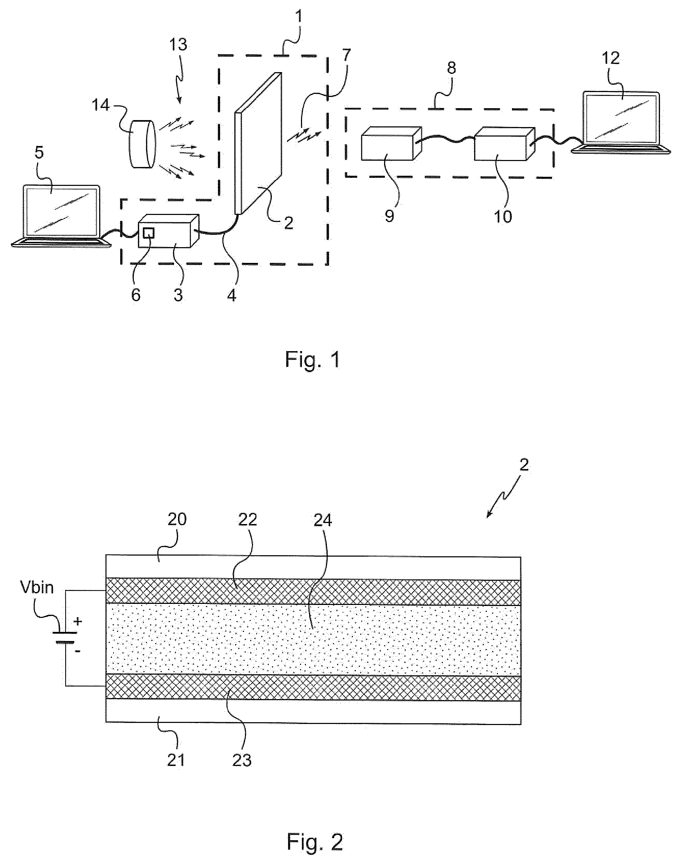

En référence à la figure 1, le système d'émission d'un signal lumineux modulé selon un premier mode de réalisation de l'invention 1 est ici intégré à un abribus et comporte un panneau 2 de l'abribus.

Une première fonction du panneau 2 de l'abribus est de protéger des personnes contre la pluie, le vent et le froid. Une deuxième fonction du panneau 2 de l'abribus est de limiter la luminosité de la lumière du soleil lorsque celle-ci est trop importante. Une troisième fonction du panneau 2 de l'abribus est relative au rôle du panneau 2 dans le système d'émission 1.

Outre le panneau 2, le système d'émission 1 comporte un module de commande 3 relié au panneau 2 par un câble électrique 4. Le module de commande 3 est ici lui-même adapté à être relié à un premier ordinateur 5.

Le premier ordinateur 5 est relié au module de commande 3 lorsqu'il convient de charger dans un espace mémoire 6 du module de commande 3 des données que le système d'émission 1 doit émettre via le signal lumineux modulé 7. Ces données peuvent être des données de tous types : musique, vidéo, etc.

Le signal lumineux modulé 7 émis par le système d'émission 1 est un signal lumineux binaire. Le signal lumineux modulé 7 s'apparente à un clignotement ou à une succession de niveaux lumineux hauts et de niveaux lumineux bas formant des états hauts et des états bas du signal lumineux modulé 7.

Le signal lumineux modulé 7 est destiné à être reçu par un appareil récepteur. L'appareil récepteur est ici un téléphone mobile 8 qui comporte un photodétecteur 9 et un récepteur 10 de type récepteur Li-Fi. Le signal lumineux modulé 7 est détecté et transformé en un signal de réception électrique par le photodétecteur 9, et le signal de réception électrique est transmis au récepteur 10 et interprété par celui-ci.

Le téléphone mobile 8 est ici adapté à être relié à un deuxième ordinateur 12 lorsqu'il convient d'afficher sur un écran du deuxième ordinateur 12 les données reçues par le téléphone mobile 8.

Pour émettre le signal lumineux modulé 7, le module de commande 3 génère un signal électrique de modulation qui est représentatif des données que doit émettre le système d'émission 1 et qui est transmis au panneau 2 par le câble électrique 4.

Le signal électrique de modulation est une tension binaire constituée par une succession de niveaux hauts et de niveaux bas de tension. Le panneau 2 module alors un flux lumineux 13 issu de la lumière du soleil 14 et de ses réflexions sous l'effet du signal électrique de modulation.

La modulation du flux lumineux 13 forme le support physique du signal lumineux modulé 7.

En référence à la figure 2, le panneau 2 comporte, pour moduler le flux lumineux 13, sept couches poreuses imprimées superposées : un premier substrat 20, un deuxième substrat 21, une première électrode transparente 22, une deuxième électrode transparente 23, une couche de stockage (non représenté), un électrolyte (non représenté) et une couche d'un matériau modulant 24, en l'occurrence d'un matériau électrochrome. La première électrode transparente 22 et la deuxième électrode transparente 23 sont situées entre le premier substrat 20 et le deuxième substrat 21, alors que le matériau modulant 24 est disposé entre les électrodes 22, 23. Le matériau électrochrome est par exemple un nanocristal plasmonique électrochrome qui présente une durabilité importante, des temps de réaction relativement faibles et un rendu de couleur relativement bon.

La tension binaire Vbin du signal électrique de modulation est appliquée entre la première électrode transparente 22 et la deuxième électrode transparente 23.

Lorsqu'un niveau haut de la tension binaire Vbin est appliqué entre la première électrode transparente 22 et la deuxième électrode transparente 23, une réaction d'oxydo-réduction se produit au sein du matériau modulant 24 qui modifie la couleur du matériau modulant 24 et augmente la transmittance lumineuse du matériau modulant 24. La transmittance lumineuse du matériau modulant 24 atteint un niveau de transmittance lumineuse élevé. La fraction du flux lumineux 13 traversant le panneau 2 est donc élevée, et le photodétecteur 9 du téléphone mobile 8 détecte un état haut du signal lumineux modulé 7.

Au contraire, lorsqu'un niveau bas de la tension binaire Vbin est appliqué entre la première électrode transparente 22 et la deuxième électrode transparente 23, la couleur du matériau modulant 24 change à nouveau et la transmittance lumineuse du matériau modulant 24 est réduite. La transmittance lumineuse du matériau modulant 24 atteint un niveau de transmittance lumineuse faible. La fraction du flux lumineux 13 traversant le panneau 2 est donc faible, et le photodétecteur 9 du téléphone mobile 8 détecte un état bas du signal lumineux modulé 7.

Ainsi, la succession des niveaux hauts et des niveaux bas de la tension binaire Vbin du signal électrique de modulation a pour effet de commuter la transmittance lumineuse du matériau modulant 24 en générant une succession de niveaux hauts et de niveaux bas de la transmittance lumineuse du matériau modulant 24 et donc une succession d'états hauts et d'états bas formant le signal lumineux modulé 7.

Le téléphone mobile 8 récupère ainsi le signal électrique de modulation en recevant le signal lumineux modulé 7, et acquiert les données émises par le système d'émission 1.

On note que le premier substrat 20 et le deuxième substrat 21 assurent le maintien des couches superposées, que la couche de stockage permet le transfert d'ions au cours de la réaction d'oxydo-réduction, et que la couche électrolyte permet le passage d'un courant électrique par déplacement des ions mais sans déplacement d'électrons au cours de la réaction d'oxydo-réduction.

On note de plus que la deuxième fonction du panneau 2 de l'abribus, évoquée plus tôt et consistant à limiter la luminosité de la lumière du soleil 14 lorsque celle-ci est trop importante, est elle aussi mise en oeuvre en utilisant le matériau modulant 24. Le panneau 2 comporte un détecteur de luminosité qui, lorsqu'il détecte un niveau de luminosité trop important, applique un niveau bas de tension entre la première électrode transparente 22 et la deuxième électrode transparente 23 pour réduire la transmittance lumineuse du panneau 2.

Le système d'émission d'un signal lumineux modulé selon un deuxième mode de réalisation de l'invention est ici intégré dans une liseuse électronique et comporte un écran de la liseuse électronique.

Outre l'écran de la liseuse électronique, le système d'émission comporte un module de commande relié à l'écran par un câble électrique.

Le signal lumineux modulé est destiné à être reçu par un appareil récepteur. L'appareil récepteur est ici un téléphone mobile qui comporte un photodétecteur et un récepteur Li-Fi. Le signal lumineux modulé est détecté et transformé en un signal de réception électrique par le photodétecteur, puis transmis au récepteur 10 et interprété par celui-ci.

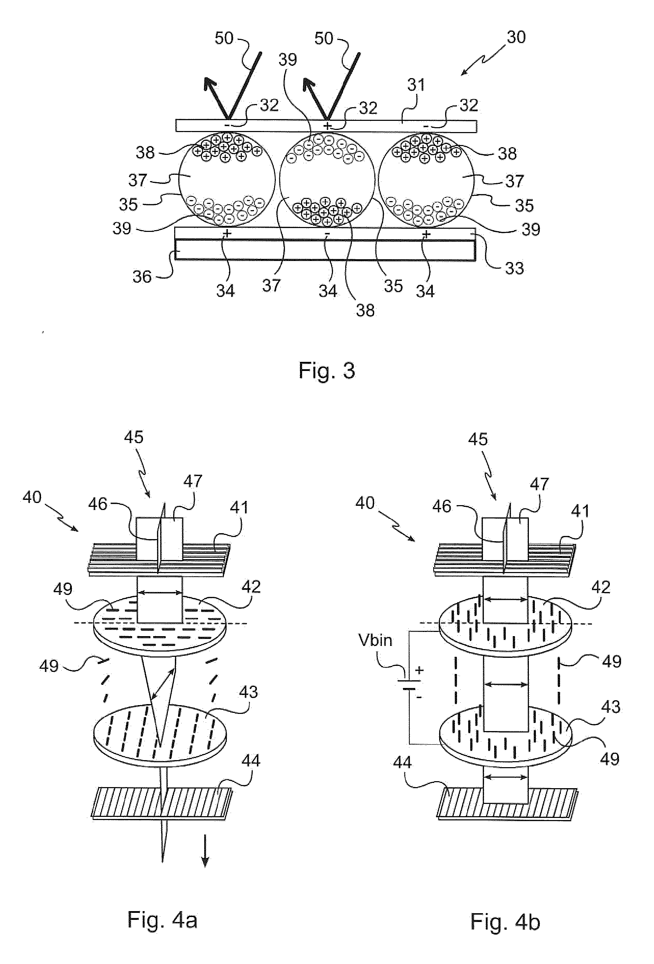

En référence à la figure 3, l'écran 30 comporte ici une première couche 31 de premières électrodes transparentes 32, une deuxième couche 33 de deuxièmes électrodes transparentes 34, une pluralité de microcapsules transparentes 35 et une couche de protection 36.

La pluralité de microcapsules transparentes 35 est située entre la première couche 31 et la deuxième couche 33. La deuxième couche 33 est positionnée entre la pluralité de microcapsules transparentes 35 et la couche de protection 36.

La pluralité de microcapsules transparentes 35 constitue un matériau modulant, en l'occurrence un matériau électrophore.

Les premières électrodes 32 de la première couche 31 sont reliées successivement, via le câble électrique, à une borne positive et à une borne négative d'un générateur de tension du module de commande. De même, les deuxièmes électrodes 34 de la deuxième couche 33 sont reliées successivement, via le câble électrique, à une borne positive et à une borne négative du générateur de tension du module de commande.

Chaque microcapsule transparente 35 est positionnée entre une première électrode 32 reliée à une borne positive du générateur de tension et une deuxième électrode 34 reliée à une borne négative du générateur de tension, ou bien entre une première électrode 32 reliée à une borne négative du générateur de tension et une deuxième électrode 34 reliée à une borne positive du générateur de tension.

Chaque microcapsule transparente 35 contient une certaine quantité d'une huile transparente 37, des pigments de couleur noire 38 chargés positivement et des pigments de couleur blanche 39 chargés négativement.

Le module de commande génère une pluralité de signaux électriques de modulation, chaque signal électrique de modulation étant une tension binaire constituée par une succession de niveaux hauts et de niveaux bas de tension et appliquée entre la première électrode 32 de la première couche 31 et la deuxième électrode 34 de la deuxième couche 33 associées à chaque microcapsule 35.

Lorsqu'un niveau haut de tension est appliqué entre une première électrode 32 de la première couche 31 et une deuxième électrode 34 de la deuxième couche 33, les pigments de couleur noire 38 chargés positivement de la microcapsule 35 correspondante vont se regrouper à proximité de l'électrode reliée à la borne négative du générateur de tension du module de commande, et les pigments de couleur blanche 39 chargés négativement de la microcapsule 35 correspondante vont se regrouper à proximité de l'électrode reliée à la borne positive du générateur de tension du module de commande.

On confère ainsi à la surface de la microcapsule 35 en regard de l'électrode reliée à la borne positive la couleur blanche des pigments 39 chargés négativement, et on confère à la surface de la microcapsule 35 en regard de l'électrode reliée à la borne négative la couleur noire des pigments 38 chargés positivement.

La première couche 31 est ici une couche visible depuis une position extérieure à la liseuse électronique et face à l'écran 30 de la liseuse électronique. Ainsi, lorsqu'un flux lumineux 50 issu de la lumière du soleil parvient à une microcapsule 35, il est réfléchi par la microcapsule 35.

La couleur noire des pigments 38 chargés positivement est ainsi visible depuis la position extérieure si la première électrode 32 de la première couche 31 associée à la microcapsule 35 est reliée à une borne négative du générateur de tension du module de commande. La couleur blanche des pigments 39 chargés négativement est visible si la première électrode 32 de la première couche d'électrodes 31 associée à la microcapsule 35 est reliée à une borne positive du générateur de tension du module de commande.

Ainsi, en commutant la couleur de chaque microcapsule 35, on module le flux lumineux 50 réfléchi sur chaque microcapsule 35 et on génère un signal lumineux binaire formant un signal lumineux modulé.

Le système d'émission selon le deuxième mode de réalisation génère donc une pluralité de signaux lumineux binaires formant une pluralité de signaux Li-Fi produits à partir d'une pluralité de signaux électriques de modulation, chaque signal électrique de modulation étant associé à une microcapsule 35. Chaque microcapsule 35 peut donc être considérée comme un pixel de l'écran 30 de la liseuse électronique pour l'émission de données via le signal lumineux modulé.

En référence aux figures 4a et 4b, le système d'émission d'un signal lumineux modulé selon un troisième mode de réalisation de l'invention est à nouveau intégré à un abribus et comporte un panneau 40 de l'abribus.

Outre le panneau 40, le système d'émission comporte un module de commande relié au panneau 40 par un câble électrique.

Le panneau comporte un filtre de polarisation horizontale 41, une première couche de verre 42 formant une première électrode, une deuxième couche de verre 43 formant une deuxième électrode, un matériau modulant, en l'occurrence un matériau à cristaux liquides constitué de molécules 49 de cristal liquide et situé entre la première couche de verre 42 et la deuxième couche de verre 43, et un filtre de polarisation verticale 44.

Lorsqu'un flux lumineux 45 présentant une composante verticale 46 et une composante horizontale 47 atteint le filtre de polarisation horizontale 41, la composante verticale 46 est bloquée par le filtre de polarisation horizontale 41 et seule la composante horizontale 47 est transmise à la première couche de verre 42. En se rapprochant de la surface de la deuxième couche de verre 43, les molécules 49 du cristal liquide pivotent et se réorientent. La polarisation du flux lumineux atteignant la deuxième couche de verre 43 pivote et devient sensiblement verticale. Une partie importante de ce flux lumineux traverse alors le filtre de polarisation verticale 44. La transmittance lumineuse du matériau modulant et donc du panneau 40 est relativement importante. Cette situation correspond à la figure 4a.

Dans la situation de la figure 4b, lorsqu'on applique un niveau haut d'une tension Vbin entre la première couche de verre 42 et la deuxième couche de verre 43, le niveau haut de la tension Vbin génère un champ électrique entre la première couche de verre 42 et la deuxième couche de verre 43 qui force l'orientation des molécules 49 du cristal liquide dans un axe orthogonal au plan du filtre de polarisation horizontale 41 et au plan du filtre de polarisation verticale 44. La polarisation du flux lumineux atteignant la deuxième couche de verre 43 demeure horizontale et le flux lumineux est bloqué par le filtre de polarisation verticale 44.

En utilisant une tension binaire constituée d'une succession de niveaux bas de tension et de niveaux hauts de tension, on commute la transmittance lumineuse du matériau à cristaux liquides et on génère une succession d'états hauts et d'états bas formant le signal lumineux modulé.

On note ici que le système d'émission de l'invention selon les trois modes de réalisation décrits présente une très faible consommation énergétique. Dans les trois modes de réalisation, la tension du signal électrique de modulation est relativement basse, et le courant consommé sous cette tension est très faible.

Bien entendu, l'invention n'est pas limitée aux modes de réalisation décrits, mais englobe toute variante entrant dans le champ de l'invention telle que définie par les revendications.

Bien que la source lumineuse externe décrite ici soit une source lumineuse naturelle (la lumière issue du soleil et ses réflexions), l'invention peut parfaitement être mise en oeuvre un utilisant une source lumineuse artificielle (par exemple, une lampe).

Dans le cas du système d'émission selon le premier mode de réalisation de l'invention, une variation de la transmittance lumineuse est utilisée pour transmettre le flux lumineux. Il est bien sûr possible d'utiliser une variation d'une autre caractéristique du matériau électrochrome pour moduler le flux lumineux, par exemple une variation de la couleur ou de l'opacité ou de la réflexivité du matériau électrochrome.

Dans le cas du système d'émission selon le deuxième mode de réalisation de l'invention, une variation de la couleur est utilisée pour transmettre le flux lumineux. Il est bien sûr possible d'utiliser une variation d'une autre caractéristique du matériau électrophore, par exemple sa réflectivité.

Bien que l'on ait ici décrit plusieurs manières d'intégrer le matériau modulant dans un panneau et dans une liseuse, le matériau modulant peut parfaitement se présenter sous une forme différente ou être intégré différemment. Il peut notamment se présenter sous la forme d'un film plastique disposé dans un panneau, ou bien être positionné entre deux lames de verre ou de plastique.

De même, le nombre de couches des empilements de couches intégrant le matériau modulant peut bien sûr être différent de ceux décrits ici. Ainsi, il est par exemple possible de réduire de sept à trois ou quatre le nombre de couches de l'empilement intégrant le matériau électrochrome.

Bien que l'on ait décrit des systèmes d'émission utilisant un panneau d'abribus et un écran de liseuse électronique, il est parfaitement possible d'utiliser d'autres supports pour intégrer le matériau modulant du système d'émission de l'invention : vitre de fenêtre, de porte, panneau d'affichage situé dans tout type d'endroit (aéroport, gare, train, centre commercial, etc.), panneau d'infrastructure, écran d'ordinateur, de tablette, de téléphone mobile, etc. Des données de tous types peuvent être transmises via un signal lumineux modulé par le système d'émission de l'invention : musique, vidéos, données internet, données de mesure (par exemple des données mesurées par un ou des capteurs tels qu'un thermomètre, un anémomètre, un capteur d'humidité, un capteur de luminosité), signaux d'alarmes (incendie, présence de vapeurs toxiques, etc.), etc.

De même, bien que l'on ait indiqué que l'appareil récepteur est un téléphone mobile, on peut parfaitement envisager que l'appareil récepteur soit un appareil différent : tablette, ordinateur portable, etc. De même, bien que l'on ait indiqué que le téléphone mobile peut être connecté à un ordinateur portable pour afficher les données reçus, il est possible de prévoir de connecter le téléphone mobile (ou autre appareil récepteur) à un autre téléphone mobile ou à tout autre appareil électrique adapté à afficher des données, ou bien de ne pas prévoir ce type de connexion.

Bien que l'on ait présenté une architecture particulière du système d'émission comprenant un module de commande relié par un câble électrique au panneau et éventuellement à un ordinateur, cette architecture peut être différente. En particulier, le module de commande peut être intégré au panneau, ou bien peut recevoir des données par des signaux radiofréquences, ou bien encore peut transmettre au panneau le signal électrique de modulation via un signal radiofréquences. Le module de commande peut aussi être conçu de manière à être compatible avec des protocoles de communication Li-Fi traditionnels de manière à émettre et/ou recevoir des informations codées en Li-Fi traditionnel.

## Revendications

1. Système d'émission d'un signal lumineux modulé comportant un module de commande (3) destiné à générer un signal électrique de modulation et un matériau modulant (24 ; 35 ; 49) adapté à transmettre un flux lumineux issu d'une source lumineuse externe (14), la modulation du flux lumineux étant réalisée par une variation, sous l'effet du signal électrique de modulation, d'une caractéristique optique du matériau modulant.

2. Système d'émission d'un signal lumineux modulé selon la revendication 1, dans lequel la transmission du flux lumineux est une réflexion du flux lumineux sur le matériau modulant (24 ; 35 ; 49).

3. Système d'émission d'un signal lumineux modulé selon la revendication 1, dans lequel la transmission du flux lumineux est une traversée du matériau modulant (24 ; 35 ; 49) par le flux lumineux.

4. Système d'émission selon la revendication 1, dans lequel le signal électrique de modulation est un signal binaire et dans lequel la variation de la caractéristique optique du matériau modulant (24 ; 35 ; 49) est une commutation entre un niveau haut de la caractéristique optique correspondant à un état haut du signal lumineux modulé et un niveau bas de la caractéristique optique correspondant à un état bas du signal lumineux modulé.

5. Système d'émission selon la revendication 1, dans lequel la caractéristique optique du matériau modulant est une couleur ou une transmittance lumineuse ou une réflectivité du matériau modulant (24 ; 35 ; 49).

6. Système d'émission selon la revendication 1, dans lequel le matériau modulant est un matériau électrochrome (24) ou un matériau électrophore (35) ou un matériau à cristaux liquides (49).

7. Système d'émission selon la revendication 1, le système d'émission comportant en outre deux électrodes (22, 23 ; 32, 34 ; 42, 43), le signal électrique de modulation étant une tension (Vbin) appliquée entre les deux électrodes pour provoquer une réaction de type chimique ou physique dans le matériau modulant qui modifie la caractéristique optique du matériau modulant.

8. Système d'émission selon la revendication 7, dans lequel les électrodes et le matériau modulant forment des couches empilées, le matériau modulant étant positionné entre les deux électrodes.

9. Système d'émission selon la revendication 1, dans lequel le matériau modulant est intégré dans une vitre ou dans un panneau (2 ; 40) de type panneau d'abribus ou panneau d'affichage ou panneau d'infrastructure.

10. Système d'émission selon la revendication 1, dans lequel le matériau modulant est intégré dans un écran (30) de type écran d'ordinateur ou écran de liseuse électronique ou écran de tablette ou écran de téléphone mobile.
